# EUROPEAN PATENT APPLICATION

(11) **EP 2 881 888 A1**
(43) Date of publication of application: **10.06.2015**
(21) Application number: 13797200.6
(22) Date of filing: 26.06.2013
(51) Int. Cl.: G06K 7/00

(54) **INFORMATION PROCESSING METHOD AND DEVICE**

(30) Priority: 03.08.2012 CN 201210275255
(71) Applicant: ZTE Corporation, Shenzhen, Guangdong 518057 (CN)
(72) Inventor: XU, Jian, Shenzhen Guangdong 518057 (CN)
(74) Representative: Modiano, Micaela Nadia
(86) International application number: PCT/CN2013/078041
(87) International publication number: WO 2013/178118

(57) **Abstract**

An information processing method and device, and the method includes: collecting tag information through a short-range information collecting apparatus provided in an electronic device, analyzing the collected tag information to obtain time information about the occurrence time corresponding to a reminding event contained in the tag information; generating a reminder time to remind the user of the reminding event based on the time information, and generating in a memorandum module in the electronic device reminder information corresponding to the reminding event and including at least the reminding event and the reminder time, wherein the reminder information can be output through an output unit in the electronic device to remind the user corresponding to the electronic device. Through the abovementioned technical scheme, the user does not need to manually add the tag information into the memorandum, instead, the electronic device directly adds the tag information into the memorandum, and directly reminds the user according to the time information in the tag information, thereby making the user not miss important information.

## Description

### Technical Field

The present invention relates to the field of information processing technology, and more particularly, to an information processing method and device.

### Background of the Invention

In life, the end user receives a variety of advertising information from time to time, and with the rapid development of mobile communication technology, a wide variety of advertising information is delivered to the user in various forms, wherein delivering the advertising information via cell phone text messages is the most typical one. The user needs to obtain the information needed by the user from the variety of complex information through user operations, and add the information into the memorandum through the user operations to use it as the information to which the user will be reminded at the time to pay attention.

Saving the information into the memorandum by means of the abovementioned method makes the user need to process a large amount of information and causes the user to miss processing important information.

Furthermore, when the user searches out the important information, the user needs to manually save the needed information into the memorandum, making the user operations complicated.

When the user adds the needed information into the memorandum, the information's prompt time needs to be set in the memorandum by user operation, thus resulting in that the set time is not precise enough.

### Summary of the Invention

The present invention provides an information processing method and device, to solve the problem in the related art that the user needs to manually save the needed information into the memorandum, and needs to set an information prompt time in the memorandum through user operations.

To solve the abovementioned technical problem, the following technical scheme is used:
an information processing method, applied to an electronic device, wherein the electronic device comprises a short-range information collecting unit, and the method comprises:
   collecting tag information through the short-range information collecting unit;
   analyzing the tag information collected, obtaining time information about occurrence time corresponding to a reminding event contained in the tag information;
   based on the time information, generating a reminder time to remind the user of the reminding event;
   generating in a memorandum module in the electronic device reminder information corresponding to the reminding event and including at least the reminding event and the reminder time, wherein the reminder information is able to be output via an output unit in the electronic device to remind the user corresponding to the electronic device.

Alternatively, the step of generating in the memorandum module in the electronic device the reminder information corresponding to the reminding event and including at least the reminding event and the reminder time comprises:
determining whether the reminder time in the tag information is after current time information or not, and generating a determination result;
if the determination result is that the reminder time is after the current time information, adding the reminder time into the memorandum module in the electronic device.

Alternatively, the step of generating a reminder time to reminder the user of the reminding event based on the time information comprises:
setting the time information in the tag information as the reminder time in the memorandum module.

Alternatively, after the step of generating in the memorandum module in the electronic device the reminder information corresponding to the reminding event and including at least the reminding event and the reminder time, the method further comprises:
obtaining previously stored memorandum information in the memorandum module, and determining first time information in the previously stored memorandum information;
comparing the first time information with the reminder time, and generating a comparison result;
if the comparison result is that the first time information and the reminder time are not the same, setting the reminder time as a prompt time.

Alternatively, after the step of obtaining the previously stored memorandum information in the memorandum module and determining the first time information in the previously stored memorandum information, the method further comprises:
when the tag information comprises at least second time information and third time information, comparing the first time information with the second time information and the third time information;
if the second time information and the first time information are same, while the third time information and the first time information are not same, then setting the third time information as the reminder time of the tag information.

Alternatively, after the step of analyzing the collected tag information and obtaining the time information about the occurrence time corresponding to a reminding event contained in the tag information, the method further comprises:
based on the time information, generating a reminder time according to a preset rule;
based on the prompt time, adding the tag information into the memorandum module in the electronic device to make the memorandum module generate reminder information to prompt the user according to the prompt time.

Alternatively, before the step of adding the tag information into the memorandum module in the electronic device based on the time information, the method further comprises:
obtaining image data in the tag information based on the tag information, wherein the image data is displayed on a display unit of the electronic device.

An information processing device, and the device comprises a short-range information collecting unit, an analyzing unit, a reminder time generating unit, a processing unit and a reminding unit, wherein:
the short-range information collecting unit is configured to: collect tag information;
the analyzing unit is configured to: analyze the tag information collected, obtain time information about event occurrence time corresponding to a reminding event contained in the tag information;
the reminder time generating unit is configured to: generate a reminder time to remind the user of the reminding event based on the time information;
the processing unit is configured to: generate in the memorandum module in the electronic device reminder information including at least the reminding event and the reminder time and corresponding to the reminding event;
the reminding unit is configured to: generate reminder information to prompt the user according to the reminder time.

Alternatively, the processing unit comprises a determining module and an information adding module, wherein:
the determining module is configured to: determine whether the reminder time in the tag information is after current time or not, and generate a determination result;
the information adding module is configured to: if the determination result is that the time information is after the current time, add the tag information into the memorandum module in the electronic device.

Alternatively, the device further comprises a time setting unit, wherein:
the time setting unit is configured to: set the time information in the tag information as the prompt time in the memorandum module.
Through the abovementioned technical scheme, the user does not need to manually add the tag information into the memorandum, instead, the electronic device directly adds the tag information into the memorandum, directly reminds the user according to the time information in the tag information, and thus makes the user not miss important information.

The specific prompt time is determined by comparing the time information in the tag information with the time information in the previously stored memorandum, so as to provide the user with the information processing time, improve the information processing capability of the electronic device, and make the setting of the reminder time in the memorandum more reasonable.

### Brief Description of the Drawings

FIG. 1 is a flow chart of an information processing method in accordance with an embodiment of the present invention;
FIG. 2 is a schematic diagram of the structure of an information processing device in accordance with an embodiment of the present invention;
FIG. 3 is a schematic diagram of the specific structure of processing unit 203 in accordance with an embodiment of the present invention.

### Preferred Embodiments of the Invention

The embodiment of the present invention provides an information processing method and device to solve the problem in the related art that a user needs to manually save the needed information into the memorandum, and needs to set an information prompt time in the memorandum through user operations. Specifically, in the embodiment of the present invention, an electronic device uses the short-range information collecting apparatus (such as the camera or NFC sensor) provided in the electronic device to collect tag information, analyzes the collected tag information, obtains the time information contained in the tag information about the occurrence time corresponding to a reminding event, generates a reminder time to remind the user of the reminding event based on the time information, generates in the memorandum module in the electronic device reminder information including at least the reminding event and the reminder time corresponding to the reminding event, wherein the reminder information can be output through the output unit in the electronic device to remind the user corresponding to the electronic device.

Hereinafter, the technical scheme of the present invention will be further described with the accompanying drawings and specific embodiments, it should be understood that the specific embodiments described herein provide a further description of rather than a limitation on the technical scheme of the present invention, and in the case of no conflict, the embodiments and features in the embodiments of the present invention may be combined with each other.

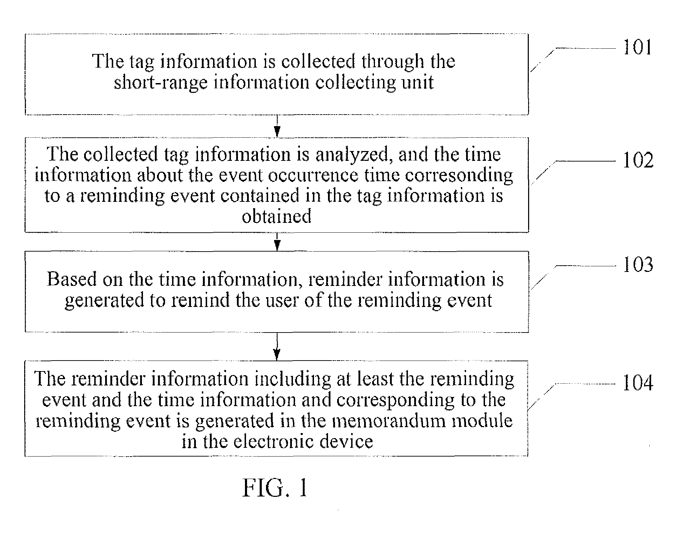

FIG. 1 is a flow chart of an information processing method in accordance with an embodiment of the present invention, and the method specifically comprises the following steps.

Step 101, the tag information is collected through the short-range information collecting unit.

First, in the embodiment of the present invention, this method is applied to an electronic device, and the electronic device is provided with a short-range information collecting apparatus, such as the camera, NFC proximity sensor, Bluetooth, or other apparatus in a mobile phone. The tag information can be obtained through the short-range information collecting apparatus, wherein the tag information is provided in another object, and the object may be on the tag of a commodity product or a bulletin board. For example, when a user uses a cell phone or any other handheld electronic device to approach an object provided with tag information, if the tag information is a two-dimensional code image, the short-range information, collecting apparatus in the phone is a camera, and then the phone activates the camera and reads the tag information in the two-dimensional code in the object.

If the object is provided with a NFC proximity sensor, a connection is established between the NFC proximity sensor provided in the mobile phone and the NFC proximity sensor provided in the object, and the NFC proximity sensor in the object proactively pushes the tag information to the mobile phone, thereby enabling the mobile phone obtain the tag information in the object.

Specifically, when the user is shopping in the mall where all the products in the mall are set with a two-dimensional code or a NFC proximity sensor, if the user is interested in a particular product, the user can directly obtain the tag information contained in the product through the short-range information collecting apparatus in the phone, for example, the tag information comprises the origin, price and sales promotion time and other information of the product.

After obtaining the tag information of the object, the electronic device performs step 102.

Step 102, the collected tag information is analyzed, and the time information about the event occurrence time corresponding to the reminding event contained in the tag information is obtained.

In step 101, the user obtains the tag information of the product through the electronic device, at this time, the electronic device analyzes the obtained tag information, and obtains the time information, contained in the tag information, about the event occurrence time corresponding to a reminding event. For example, the user can obtain the tag information of a product after using the mobile phone to scan the product in the mall, and the tag information comprises the origin, the price, the sales promotion time and other information of the product, and for the user, the price in sales promotion of the product is the most valuable information for the user, and the phone will obtain the sales promotion time.

After obtaining the tag information of the product, the electronic device performs step 103.

Step 103, based on the time information, reminder information is generated to remind the user of the reminding event.

In step 102, after the electronic device obtains the time information in the tag information, the electronic device compares the obtained time information with the current time information and generates a determination result, if the determination result is that the time information in the tag information is after the current time, the electronic device generates a reminder time and adds the reminder time into the reminder information, and the electronic device performs step 103 after generating the reminder time.

Step 104, the reminder information including at least the reminding event and the time information and corresponding to the reminding event is generated in the memorandum module in the electronic device, wherein the reminder information can be output through the output device in the electronic device at the reminder time to remind the user corresponding to the electronic device.

After generating a reminder time in the electronic device in step 103, the electronic device directly adds the tag information into the memorandum in the electronic device. Specifically, the tag information comprises time information and text information. First the electronic device directly adds the text information into the memorandum module, and interrelates the text information in the tag information with the generated reminder time, meanwhile the electronic device sets the time information in the tag information as the reminder time of the tag information, thereby making the memorandum module generate a prompt command according to the time information, ultimately the electronic device prompts the user to process the tag information in accordance with the prompt command.

For example, if a user needs to buy a bicycle in a shopping mall, and the tag of the bicycle is set with a two-dimensional code or a NFC proximity sensor, when the user approaches the phone to the tag of the bicycle, the phone obtains the tag information of the bicycle. The tag information comprises origin (Chengdu), price (2000) and sales promotion time (May 1^{st}) of the bicycle, the phone analyzes the tag information, determines the sales promotion time in the tag information, and compares the sales promotion time with the current time, which is April 23^{rd}. At this time, the phone is able to determine that the promotion period May 1^{st} is after the current time April 23^{rd}, so that the phone directly adds the tag information into the memorandum of the phone, and sets the reminder time of the tag information to May 1^{st}, therefore the user does not need to manually add the tag information into the memorandum, instead, the mobile terminal directly adds the tag information into the memorandum and directly reminds the user according to the time information in the tag information, thus making the user not miss important information.

Furthermore, if there is a previously stored memorandum set by the user in the electronic device, the electronic device obtains the first time information in the previously stored memorandum and compares the first time information in the previously stored memorandum with the time information in the tag information, if the first time information and the time information in the tag information are not the same, the electronic device sets the time information as the reminder time of the tag information, and if the first time information and the time information in the tag information are the same, the electronic device prompts the user to modify the tag information or the prompt time in the previously stored memorandum.

For example: the time information in the tag information obtained by the user through the mobile phone is May 1^{st}, but a memorandum is pre-stored in the phone, and if the prompt time in the memorandum is April 28^{th}, the phone determines that the prompt time of the tag information and the time in the previously stored memorandum do not conflict with each other, therefore the phone sets May 1^{st} as the prompt time of the tag information.

If the prompt time in the previously stored memorandum is May 1^{st}, the mobile phone determines that the prompt time and the time in the tag information are the same, generates a prompt command, and generates a modification prompt interface according to the prompt command, to make the user modify the tag information or the prompt time in the previously stored memorandum through the modification prompt interface.

The specific prompt time can be determined by comparing the time information in the tag information with the time information in the previously stored memorandum, thereby providing the user with the information processing time, and improving the information processing capability of the electronic device.

Furthermore, if the tag information comprises a time period information in the embodiment of the present invention, the electronic device first obtains the time period information in the tag information, compares the time period information, and sets the time information determined to be closest to the current time as the prompt time of the tag information. For example: the user obtains the tag information of a product through the mobile phone, and the sales promotion information of the product is contained in the tag information, the sales promotion information is that sale promotion period is May 1^{st} to 8^{th}, that is, the sales promotion time of the product will last for some time, and the current time is April 20^{th}. At this time the mobile phone determines that May 1^{st} is closest to the current time, therefore the mobile phone sets May 1^{st} as the prompt time of the tag information.

Determining the prompt time in this way can timely remind the user to complete the information processing, so that the user will not miss the information processing.

Furthermore, after obtaining the time period information included in the tag information, the electronic device further determines the condition setting time in the time period information, and sets the condition setting time as the reminder time, for example: after the user's mobile phone obtains that the time period information in the tag information is May 1^{st} - May 8^{th}, the mobile phone determines whether the May 1^{st} - May 8^{th} comprise a Saturday or a weekend or not, if the May 6^{th} in the May 1^{st} to May 8^{th} is Saturday, the phone sets the reminder time of the tag information to May 5^{th}, so that the user does not need to set a specific reminder time for the tag information, instead, the mobile phone terminal can set directly, thereby saving the user's time for processing the information and also increasing the information processing capability of the electronic device.

Further speaking, in the embodiment of the present invention, if the user has a previously stored memorandum in the electronic device, the electronic device obtains the first time information in the previously stored memorandum, compares the first time information with the time information in the tag information, and determines the prompt time of the tag information according to the comparison result, for example, the time information in the tag information is May 1^{st} - May 8^{th}, at this time, if the phone detects that there is another memorandum and the phone obtains that the time information in the memorandum is May 1^{st}, at this time, the cell phone sets any time in May 2^{nd} - May 8^{th} as the prompt time of the tag. Of course, whether there exists a weekend break in this period of time or not can also be combined in the consideration, if there is a weekend break, the weekend break is set as the prompt time of the tag information. Therefore, the time of the tag information is determined with combination of information in other memorandum in the mobile phone, making the setting of the reminder time in the memorandum more reasonable.

In order to enable a user more accurately process the tag information obtained by the electronic device, the user can set a previously set rule in the electronic device, that is, the electronic device can generate prompt time information based on the time information in the tag information, for example, when the mobile phone obtains that the time information in the tag information is May 1^{st}, the previously set rule in the mobile phone end is prompting ahead of two days, that is, the prompt time of the tag information is April 29^{th}, thereby enabling the user to process the tag information in advance.

Finally, when the prompt time of the tag information arrives, the electronic device end displays the prompt information on the display unit.

Through the abovementioned embodiments, the embodiment of the present invention is able to timely save the tag information obtained by the electronic device into the memorandum module in the electronic device, to achieve the automatic conversion of the information and the memorandum, and the time information can be obtained from the information, thereby determining a prompt time based on the time information, and enabling the electronic device to prompt the user at the right time to process the information.

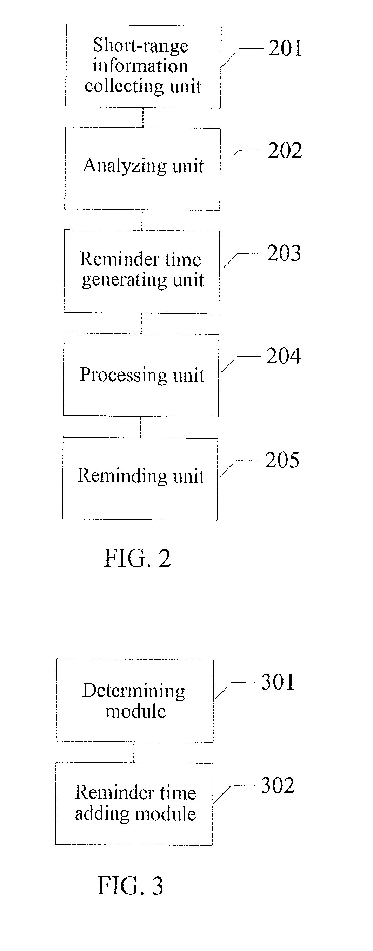

In addition, FIG. 2 shows an information processing device in accordance with an embodiment of the present invention, and the device comprises short-range information collecting unit 201, analyzing unit 202, reminder time generating unit 203, processing unit 204 and reminding unit 205, wherein:
the short-range information collecting unit 201 is configured to: collect tag information;
the analyzing unit 202 is configured to: analyze the collected tag information, obtain the time information about the event occurrence time corresponding to a reminding event contained in the tag information;
the reminder time generating unit 203 is configured to: generate a reminder time to remind the user of the reminding event based on the time information;
the processing unit 204 is configured to: generate in the memorandum module in the electronic device the reminder information including at least the reminding event and the reminder time and corresponding to the reminding event;
the reminding unit 205 is configured to: generate reminder information to prompt the user according to the reminder time.

Wherein, the short-range information collecting unit 201 may be a camera or a NFC proximity sensor. After collecting the tag information, the short-range image collecting unit sends the tag information to the analyzing unit 202, and the analyzing unit 202 analyzes the received tag information, obtains from the tag information the time information contained in the tag information about the event occurrence time corresponding to the reminding event, and sends the time information to the reminder time generating unit 203, thereby the reminder time generating unit 203 generates a reminder time to remind the user of the reminding event according to the time information, and after the reminder time generating unit 203 generates the reminder time, the processing unit 204 in the electronic device adds the tag information into the memorandum module, and at the same time adds the reminder time generated in the reminder time generating unit 203 into the memorandum module, and interrelates the reminder time with the tag information, thereby the reminding unit 205 can generate reminder information to prompt the user of the reminding event according to the reminder time in the memorandum module.

Furthermore, FIG. 3 shows the schematic diagram of the specific structure of the reminder time generating unit 203 in accordance with the embodiment of the present invention, and the processing unit 203 specifically comprises determining module 301 and reminder time adding module 302, wherein:
the determining module 301 is configured to: determine whether the reminder time in the tag information is after the current time information or not, and generate a determination result.
the reminder time adding module 302 is configured to: add the reminder time into the memorandum module in the electronic device if the determination result is that the reminder time is after the current time information.

The embodiment of the present invention provides an information processing method and device, the electronic device end collects the tag information through a short-range information collecting means provided in the electronic device, analyzes the collected tag information, obtains the time information contained in the tag information about the occurrence time corresponding to a reminding event, generates a reminder time to remind the user of the reminding event based on the time information, and generates in the memorandum module in the electronic device the reminder information including at least the reminding event and reminder time and corresponding to the reminding event, the reminder information is output through the output unit in the electronic device to remind the user corresponding to the electronic device. Therefore, the problem in the prior art that a user needs to manually save the needed information into the memorandum and needs to set the information prompt time in the memorandum through the user operations is solved.

Furthermore, one or more of the technical schemes provided in the embodiments of the present invention have at least the following technical effects or advantages:
through the embodiments of the present invention, the user does not need to manually add the tag information into the memorandum, instead, the electronic device directly adds the tag information into the memorandum, and directly reminds the user according to the time information in the tag information, thus making the user not miss important information.

The specific prompt time is determined by comparing the time information in the tag information with the time information in the previously stored memorandum, thereby providing the user with the information processing time, improving the information processing capability of the electronic device, and making the setting of the reminder time in the memorandum more treasonable.

Although the preferred embodiments of the present invention have been described, once a person skilled in the art learns the basic inventive concepts, the person can make additional changes and modifications on these embodiments. Therefore, the appended claims are intended to comprise the preferred embodiments and all changes and modifications falling within the scope of the present invention.

Obviously, those skilled in the art may make various modifications and variations of the present invention without departing from the spirit and scope of the present invention. Therefore, if such modifications and variations of the present invention belong to the claims of the present invention and its equivalent technical scope, the present invention is also intended to encompass such modifications and variations.

### Industrial Applicability

Through the abovementioned technical scheme, the user does not need to manually add the tag information into the memorandum, instead, the electronic device directly adds the tag information into the memorandum, and directly reminds the user according to the time information in the tag information, and further makes the user not miss important information. The specific prompt time is determined by comparing the time information in the tag information with the time information in the previously stored memorandum, to provide the user with the information processing time, improve the information processing capability of the electronic device, and make the setting of the reminder time in the memorandum more reasonable. Therefore, the present invention has very strong industrial applicability.

## Claims

1. An information processing method, applied to an electronic device, wherein the electronic device comprises a short-range information collecting unit, and the method comprises:
collecting tag information through the short-range information collecting unit;
analyzing the tag information collected, obtaining time information about occurrence time corresponding to a reminding event contained in the tag information;
based on the time information, generating a reminder time to remind the user of the reminding event;
generating in a memorandum module in the electronic device reminder information corresponding to the reminding event and including at least the reminding event and the reminder time, wherein the reminder information is able to be output via an output unit in the electronic device to remind the user corresponding to the electronic device.

2. The method of claim 1, wherein, the step of generating in the memorandum module in the electronic device the reminder information corresponding to the reminding event and including at least the reminding event and the reminder time comprises:
determining whether the reminder time in the tag information is after current time information or not, and generating a determination result;
if the determination result is that the reminder time is after the current time information, adding the reminder time into the memorandum module in the electronic device.

3. The method of claim 2, wherein, the step of generating a reminder time to reminder the user of the reminding event based on the time information comprises:
setting the time information, in the tag information as the reminder time in the memorandum module.

4. The method of claim 3, wherein, after the step of generating in the memorandum module in the electronic device the reminder information corresponding to the reminding event and including at least the reminding event and the reminder time, the method further comprises:
obtaining previously stored memorandum information in the memorandum module, and determining first time information in the previously stored memorandum information;
comparing the first time information with the reminder time, and generating a comparison result;
if the comparison result is that the first time information and the reminder time are not the same, setting the reminder time as a prompt time.

5. The method of claim 4, wherein, after the step of obtaining the previously stored memorandum information in the memorandum module and determining the first time information in the previously stored memorandum information, the method further comprises:
when the tag information comprises at least second time information and third time information, comparing the first time information with the second time information and the third time information;
if the second time information and the first time information are same, while the third time information and the first time information are not same, then setting the third time information as the reminder time of the tag information.

6. The method of claim 1, wherein, after the step of analyzing the collected tag information and obtaining the time information about the occurrence time corresponding to a reminding event contained in the tag information, the method further comprises:
based on the time information, generating a reminder time according to a preset rule;
based on the prompt time information, adding the tag information into the memorandum module in the electronic device to make the memorandum module generate reminder information to prompt the user according to the prompt time information.

7. The method of claim 1, wherein, before the step of adding the tag information into the memorandum module in the electronic device based on the time information, the method further comprises:
obtaining image data in the tag information based on the tag information, wherein the image data is displayed on a display unit of the electronic device.

8. An information processing device, wherein the device comprises a short-range information collecting unit, an analyzing unit, a reminder time generating unit, a processing unit and a reminding unit, wherein:
the short-range information collecting unit is configured to: collect tag information;
the analyzing unit is configured to: analyze the tag information collected, obtain time information about event occurrence time corresponding to a reminding event contained in the tag information;
the reminder time generating unit is configured to: generate a reminder time to remind the user of the reminding event based on the time information;
the processing unit is configured to: generate in the memorandum module in the electronic device reminder information including at least the reminding event and the reminder time and corresponding to the reminding event;
the reminding unit is configured to: generate reminder information to prompt the user according to the reminder time.

9. The device of claim 8, wherein, the processing unit comprises a determining module and an information adding module, wherein:
the determining module is configured to: determine whether the reminder time in the tag information is after current time information or not, and generate a determination result;
the information adding module is configured to: if the determination result is that the time information is after the current time information, add the tag information into the memorandum module in the electronic device.

10. The device of claim 8, wherein, the device further comprises a time setting unit, wherein:
the time setting unit is configured to: set the time information in the tag information as a prompt time in the memorandum module.
